(19) **Europäisches Patentamt / European Patent Office / Office européen des brevets**

(11) **EP 4 786 442 A1**

(12) ## EUROPEAN PATENT APPLICATION
published in accordance with Art. 153(4) EPC

(43) Date of publication:
05.08.2026 Bulletin 2026/32

(21) Application number: 24871528.6

(22) Date of filing: 08.08.2024

(51) International Patent Classification (IPC):
*C04B 35/80* (2006.01)    *B28B 1/52* (2006.01)
*B29B 11/16* (2006.01)    *B29C 70/20* (2006.01)
*C08J 5/04* (2006.01)    *D06M 11/45* (2006.01)
*D06M 11/74* (2006.01)

(52) Cooperative Patent Classification (CPC):
B28B 1/52; B29B 11/16; B29C 70/20; C04B 35/80;
C08J 5/04; D06M 11/45; D06M 11/74

(86) International application number:
PCT/JP2024/028412

(87) International publication number:
WO 2025/069726 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023169589

(71) Applicant: Fujimi Incorporated
Kiyosu-shi, Aichi 452-8502 (JP)

(72) Inventors:
• OGAWA, Tetsuya
Kiyosu-shi, Aichi 452-8502 (JP)
• KATO, Akihiro
Kiyosu-shi, Aichi 452-8502 (JP)
• MIWA, Naoya
Kiyosu-shi, Aichi 452-8502 (JP)

(74) Representative: Maiwald GmbH
Elisenhof
Elisenstraße 3
80335 München (DE)

(54) **METHOD FOR PRODUCING UNIDIRECTIONAL CERAMIC FIBER PREPREG, AND UNIDIRECTIONAL CERAMIC FIBER PREPREG**

(57) The present disclosure provides a means capable of obtaining a prepreg in which penetration of a matrix between non-woven fibers is enhanced to form a dense matrix structure.

The present disclosure relates to a method for producing a unidirectional ceramic fiber prepreg, the method including a step of providing plural ceramic fibers unidirectionally oriented and a ceramic particle-containing composition, a step of coating a support with the ceramic particle-containing composition to obtain a coating film, a step of immersing the plural ceramic fibers unidirectionally oriented, in the coating film, to obtain an impregnated product with the ceramic particle-containing composition, and a step of drying the impregnated product with the ceramic particle-containing composition and then peeling the support to obtain a unidirectional ceramic fiber prepreg.

## Description

### TECHNICAL FIELD

The present disclosure relates to a method for producing a unidirectional ceramic fiber prepreg, and a unidirectional ceramic fiber prepreg.

### BACKGROUND ART

Ceramic materials are advantageously excellent, for example, in hardness, mechanical strength, heat resistance, impact resistance, wear resistance, oxidation resistance or corrosion resistance, or are low in coefficient of thermal expansion, depending on the types thereof. Thus, ceramic materials are expected to be applied to various uses such as electronic components and high-temperature structural members.

Ceramic materials may be used as composite materials of plural ceramic materials or composite materials of ceramics and other materials for the purposes of further increase of functionality, enhancement of production efficiency, and others. Examples of such composite materials include those formed with prepregs including ceramic fibers and ceramic particles.

For example, JP 6978896 B discloses a method for producing a ceramic matrix composite material member, the method including a slurry adjustment step of preparing a slurry in which an oxide-based ceramic powder is dispersed in a dispersing medium, and an impregnation step of impregnating a sheet made of inorganic fibers with the slurry to form a sheet impregnated with the slurry.

### SUMMARY OF INVENTION

However, in the method described in JP 6978896 B, such a matrix is inferior in penetration between non-woven fibers, which disadvantageously fail to provide a prepreg having a dense matrix structure due to formation of internal air bubbles or the like.

An object of the present disclosure is then to provide a means capable of obtaining a prepreg in which penetration of a matrix between non-woven fibers is enhanced to form a dense matrix structure.

In order to address the above problems, one embodiment of the present disclosure provides a method for producing a unidirectional ceramic fiber prepreg, the method including a step of providing plural ceramic fibers unidirectionally oriented and a ceramic particle-containing composition, a step of coating a support with the ceramic particle-containing composition to obtain a coating film, a step of immersing the plural ceramic fibers unidirectionally oriented, in the coating film, to obtain an impregnated product with the ceramic particle-containing composition, and a step of drying the impregnated product with the ceramic particle-containing composition and then peeling the support to obtain a unidirectional ceramic fiber prepreg.

Another embodiment of the present disclosure provides a unidirectional ceramic fiber prepreg including plural ceramic fibers unidirectionally oriented and a ceramic particle-containing composition with which the plural ceramic fibers are impregnated, wherein in a cut surface along a thickness direction of the unidirectional ceramic fiber prepreg, a coefficient of variation in the number of the ceramic fibers per unit zone is 2.0 or less.

### BRIEF DESCRIPTION OF DRAWING

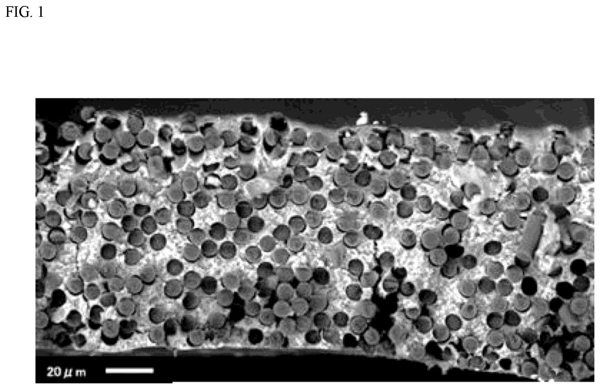

Fig. 1 illustrates a SEM photograph of a cut surface along the thickness direction of a unidirectional ceramic fiber prepreg obtained in Example.

### DESCRIPTION OF EMBODIMENTS

One embodiment of the present disclosure provides a method for producing a unidirectional ceramic fiber prepreg, the method including a step of providing plural ceramic fibers unidirectionally oriented and a ceramic particle-containing composition, a step of coating a support with the ceramic particle-containing composition to obtain a coating film, a step of immersing the plural ceramic fibers unidirectionally oriented, in the coating film, to obtain an impregnated product with the ceramic particle-containing composition, and a step of drying the impregnated product with the ceramic particle-containing composition and then peeling the support to obtain a unidirectional ceramic fiber prepreg. The production method of the present disclosure, which has such features, can provide a prepreg in which penetration of a matrix between non-woven fibers is enhanced to form a dense matrix structure.

Another embodiment of the present disclosure provides a unidirectional ceramic fiber prepreg including plural ceramic fibers unidirectionally oriented and a ceramic particle-containing composition with which the plural ceramic fibers are impregnated, wherein in a cut surface along a thickness direction of the unidirectional ceramic fiber prepreg, the coefficient of variation in the number of the ceramic fibers per unit zone is 2.0 or less.

Herein, the "prepreg" means a composite material in a semi-cured state, the composite material being produced by impregnating plural ceramic fibers unidirectionally oriented with a ceramic particle-containing composition.

The production method described in JP 6978896 B above includes a step of preparing an immersion bath in which a slurry of an oxide-based ceramic powder dispersed in a dispersing medium is placed, and then loading a sheet made of inorganic fibers in the immersion bath, to allow the slurry to penetrate between the fibers in the sheet. However, in this method, the inorganic fibers included in the sheet disadvantageously have large adhesiveness and bindingness therebetween to hardly allow the slurry to penetrate into the interior of the sheet.

In order to address this problem, a method is considered which includes loading plural ceramic fibers unidirectionally oriented (hereinafter, also simply referred to as "unidirectional ceramic fibers") in an immersion bath of a slurry to allow the slurry to penetrate into the interior of the unidirectional ceramic fibers. However, the inventors of the present disclosure have found that a problem which can be caused is that, when this method is performed, a prepreg having a dense matrix structure is not obtained due to fiber bundling or gap formation, formation of internal air bubbles, and/or the like, during lifting from the immersion bath.

In view of the above problems, the inventors of the present disclosure have made intensive studies. As a result, the inventors of the present disclosure have found that a prepreg excellent in dispersibility of unidirectional ceramic fibers is obtained by a production method including forming a coating film made of a ceramic particle-containing composition (slurry) in advance and immersing unidirectional ceramic fibers in the coating film. According to this method, which is a very simple method, it is possible to obtain a prepreg more enhanced in dispersibility of unidirectional ceramic fibers, such that the coefficient of variation in the number of ceramic fibers per unit zone is 2.0 or less. The resulting prepreg is a prepreg having a dense matrix structure. Thus, a ceramic matrix composite material (CMC: Ceramic Matrix Composites) obtained by sintering or the like of the prepreg is expected to be excellent in mechanical properties. Accordingly, it is considered that such a CMC can be suitable for a variety of uses such as electronic components and high-temperature structural members.

Hereinafter, embodiments of the present disclosure are described, but the present disclosure is not limited to only the following embodiments and can be variously modified within the claims. Embodiments described herein can be arbitrarily combined to provide another embodiment.

Herein, operations, and measurement of physical properties and the like are performed under conditions of room temperature (20°C or more and 25°C or less)/relative humidity 40% RH or more and 50% RH or less, unless particularly noted.

[Coefficient of variation]

In a unidirectional ceramic fiber prepreg according to one embodiment of the present disclosure, the coefficient of variation in the number of unidirectional ceramic fibers per unit zone is 2.0 or less, in a cut surface along a thickness direction. When the coefficient of variation is 2.0 or less, a prepreg having a dense matrix structure can be obtained. It is indicated that, as the coefficient of variation is smaller, the unidirectional ceramic fibers are more evenly dispersed in the prepreg. It is thus suggested that a prepreg having a denser matrix structure can be obtained and therefore a ceramic matrix composite material having excellent mechanical properties is obtained. On the other hand, when the coefficient of variation is more than 2.0, a prepreg having a dense matrix structure cannot be obtained because of formation of fiber bundling or gap, formation of internal air bubbles, and/or the like. The coefficient of variation is preferably 1.7 or less, more preferably 1.5 or less.

Herein, the value calculated by the following method is used as the coefficient of variation. Specifically, the unidirectional ceramic fiber prepreg is cut along with the thickness direction, and an image of a cut surface is taken with a low-vacuum scanning electron microscope. As an example, the region to be imaged has a size of 192 $\mu$m in length $\times$ 256 $\mu$m in width. In the image obtained, the length is divided into quarters with respect to the entire thickness of the prepreg and the width of 256 $\mu$m is laterally divided into quarters. Thus, zones at 16 locations in total are obtained, and the number of ceramic fibers per zone is measured with respect to each of the zones obtained (measured at 16 locations in total). The standard deviation and the average value of the numbers of ceramic fibers at such 16 locations are calculated. The value obtained by dividing the standard deviation by the average value is defined as the coefficient of variation. More specifically, the coefficient of variation can be measured by a method described in Examples.

The coefficient of variation can be controlled by, for example, adjusting the viscosity of the ceramic particle-containing composition with which the unidirectional ceramic fibers are impregnated, the immersion time, and the fiber extension tension.

[Ceramic fiber]

Ceramic fibers in one embodiment of the present disclosure are unidirectionally oriented to enhance mechanical properties of the prepreg. The orientation direction of the ceramic fibers may be the same as the longitudinal direction of the prepreg according to the present disclosure. The ceramic fibers are not particularly limited as long as they are fibers formed substantially of ceramic. Here, the content of the ceramic in the unidirectional ceramic fibers is preferably 80% by mass or more, more preferably 90% by mass or more, further preferably 100% by mass (upper limit 100% by mass) based on the total mass of the unidirectional ceramic fibers. The content of the ceramic in the unidirectional ceramic fibers can be evaluated, for example, in terms of the change in weight by thermogravimetric analysis.

The ceramic constituting the unidirectional ceramic fibers is not particularly limited, and examples thereof can include a material for use in known ceramic fibers. Examples include glass, silicon carbide, alumina, silica, mullite, and carbon. Examples also include oxides or composite oxides of Si, Ti, Zr, Mg, Hf, Al, and rare earth elements described in WO 2012/077787. The ceramic for constituting the unidirectional ceramic fibers may be used singly or in combinations of two or more kinds thereof. The ceramic fibers are more preferably silicon carbide (SiC) fibers, alumina fibers, mullite fibers, or carbon fibers.

A commercially available product or a manufactured product may be used for the unidirectional ceramic fibers. The method for obtaining the manufactured product is not particularly limited, and the manufactured product can be obtained by, for example, opening a ceramic fiber bundle. As the method for opening a ceramic fiber bundle, known methods can be used singly or in appropriate combination of two or more.

The ceramic fibers may be used singly or in combinations of two or more kinds thereof. The average fiber length, the average fineness, and the like of the ceramic fibers can be appropriately modified depending on the intended use.

The fiber content (Vf) of the unidirectional ceramic fibers in the prepreg according to the present disclosure is preferably 20% by volume or more, more preferably 25% by volume or more, further preferably 30% by volume or more. The fiber content (Vf) of the unidirectional ceramic fibers in the prepreg according to the present disclosure is preferably 85% by volume or less, more preferably 80% by volume or less, further preferably 75% by volume or less. In other words, the fiber content (Vf) of the unidirectional ceramic fibers in the prepreg according to the present disclosure is preferably 20% by volume or more and 85% by volume or less, more preferably 25% by volume or more and 80% by volume or less, further preferably 30% by volume or more and 75% by volume or less. When the fiber content (Vf) is in such a range, an advantage obtained is that the number of fibers in the prepreg is adequate with no adhesion of fibers, no fiber-deficient zone, or the like, thereby enabling prevention of local breakage or the like of a final sintered body after formation thereof. Herein, the fiber content (Vf) can be obtained by a calculation method according to ASTM D3171 or JIS K7075:1991. The fiber content (Vf) can be controlled by adjusting, for example, the thickness of a coating film produced from the ceramic particle-containing composition, the basis weight in terms of fibers used, and the solid concentration of the slurry, in a production method described below.

[Ceramic particle-containing composition]

The unidirectional ceramic fiber prepreg according to the present disclosure includes a ceramic particle-containing composition (hereinafter, also simply referred to as "composition") with which plural unidirectional ceramic fibers are impregnated. The ceramic particle-containing composition generally contains (A) ceramic particles, (B) a binder, (C) a plasticizer, and (D) water, and, if necessary, further contains (E) an acid, (F) a thickener, (G) other component, and others. Hereinafter, these components are described.

<(A) ceramic particles>

A ceramic particle-containing composition according to one embodiment of the present disclosure contains ceramic particles as an (A) component. Herein, the ceramic particles mean particles containing ceramic.

The content of the ceramic is not particularly limited, and is preferably 50% by mass or more, more preferably 70% by mass or more, further preferably 90% by mass or more (upper limit 100% by mass) based on the total mass of the ceramic particles usable as the (A) component. The content of the ceramic can be evaluated in terms of the change in weight by thermogravimetric analysis.

The type of the ceramic contained in the ceramic particles used as the (A) component is not particularly limited. Examples of the ceramic contained in the ceramic particles include a compound constituted from only carbon, an oxide, a hydroxide, a carbide, a carbonate, a nitride, a halide, a phosphate, and a boride. The oxide is not particularly limited, and examples thereof include silicon oxide, aluminum oxide (alumina, $Al_2O_3$), mullite, copper oxide, iron oxide, nickel oxide, tin oxide, cadmium oxide, zinc oxide, and zirconium oxide. The hydroxide is not particularly limited, and examples thereof include aluminum hydroxide ($Al(OH)_3$). The carbide is not particularly limited, and examples thereof include silicon carbide (SiC), and boron carbide. The nitride is not particularly limited, and examples thereof include silicon nitride, gallium nitride, titanium nitride, and lithium nitride. Examples of the ceramic contained in the ceramic particles include oxides or composite oxides of Si, Ti, Zr, Mg, Hf, Al, and rare earth elements described in WO 2012/077787. Such ceramics may be contained singly or in combinations of two or more kinds thereof in the ceramic particles.

In one preferred embodiment of the present disclosure, the (A) component includes ceramic particles containing at least one selected from the group consisting of an oxide, a carbide, a nitride, and a boride. The proportion of the content of the ceramic particles containing at least one selected from the group consisting of an oxide, a carbide, a nitride, and a boride relative to the total mass of the (A) component is preferably 50% by mass or more, more preferably 90% by mass or more (upper limit 100% by mass). The ceramic particles serving as the (A) component are further preferably the ceramic particles containing at least one selected from the group consisting of an oxide, a carbide, a nitride, and a boride.

In one still preferred embodiment of the present disclosure, the (A) component includes ceramic particles containing at least one selected from the group consisting of an oxide and a carbide. The proportion of the content of the ceramic particles containing at least one selected from the group consisting of an oxide and a carbide relative to the total mass of the (A) component is preferably 50% by mass or more, more preferably 90% by mass or more (upper limit 100% by mass). The ceramic particles serving as the (A) component are further preferably the ceramic particles containing at least one selected from the group consisting of an oxide and a carbide.

In one further preferred embodiment of the present disclosure, the ceramic particles containing a carbide include ceramic particles containing silicon carbide. The proportion of the content of the ceramic particles containing silicon carbide relative to the total mass of the ceramic particles containing a carbide is preferably 50% by mass or more, more preferably 90% by mass or more (upper limit 100% by mass). The ceramic particles containing a carbide in the (A) component are further preferably the ceramic particles containing silicon carbide.

In one further preferred embodiment of the present disclosure, the ceramic particles containing an oxide include ceramic particles containing at least one selected from the group consisting of alumina and mullite. The proportion of the content of the ceramic particles containing at least one selected from the group consisting of alumina and mullite relative to the total mass of the ceramic particles containing an oxide is preferably 50% by mass or more, more preferably 90% by mass or more (upper limit 100% by mass). The ceramic particles containing an oxide in the (A) component are further preferably the ceramic particles containing at least one selected from the group consisting of alumina and mullite.

The ceramic particles usable as the (A) component may be particles not covered, particles (covered particles) covered with a covering layer, or a combination thereof. Here, the "covered" means that at least one portion of the particle is covered with a covering layer. The covering layer is not particularly limited, and is preferably a covering layer containing aluminum hydroxide. The covering method is not particularly limited, and a known method can be used. Silicon carbide particles covered with the covering layer containing aluminum hydroxide are not particularly limited, and can be produced by appropriately adopting a method and conditions described in, for example, WO 2019/065956. The composition and the structure of the covered particles can be analyzed by, for example, SEM (Scanning Electron Microscope)-EDX (Energy Dispersive X-ray Spectroscopy) observation, TEM (transmission Electron Microscope)-EDX (Energy Dispersive X-ray Spectroscopy) observation or EELS (Electron Energy Loss Spectroscopy) analysis, or, if necessary, any combination of plural measurement procedures.

The ceramic particles usable as the (A) component may be surface-treated. The type, the method, and the like of such surface treatment are not particularly limited, and known type, method, and the like of surface treatment can be appropriately adopted.

Preferred examples of the (A) component include oxide particles, carbide particles, oxide particles covered with a covering layer, and carbide particles covered with a covering layer. Specific examples are not particularly limited, and include silicon oxide particles, mullite particles, alumina particles, copper oxide particles, iron oxide particles, nickel oxide particles, tin oxide particles, cadmium oxide particles, zinc oxide particles, zirconium oxide particles, silicon carbide particles, boron carbide particles, and these particles each covered with a covering layer. In particular, mullite particles, alumina particles, silicon carbide particles, and silicon carbide particles covered with a covering layer containing aluminum hydroxide (SiC particles covered with aluminum hydroxide) are more preferred. At least one selected from the group consisting of alumina particles, silicon carbide particles, and silicon carbide particles covered with a covering layer containing aluminum hydroxide (SiC particles covered with aluminum hydroxide) are further preferred, and SiC particles covered with aluminum hydroxide are particularly preferred.

The shape of the ceramic particles usable as the (A) component is not particularly limited, and may be a spherical shape or a non-spherical shape. Specific examples of the non-spherical shape include various shapes, for example, polygonal columns such as a triangular column and a quadrangular column, a cylindrical shape, a bale shape in which the central portion of a cylinder expands more than the end portion, a donut shape in which the central portion of a disc penetrates, a plate-like shape, a so-called cocoon shape having a constriction at the central portion, a so-called associated spherical shape in which plural particles are integrated, a beaded shape in which plural particles are connected substantially in line, a so-called kompeito shape having plural protrusions on the surface, a rugby ball shape, and a needle-type shape narrower than a rugby ball shape, but are not particularly limited thereto.

The average primary particle size of the ceramic particles usable as the (A) component is not particularly limited, and is preferably 0.001 $\mu$m or more, more preferably 0.005 $\mu$m or more, further preferably 0.01 $\mu$m or more. Such a range more suppresses ceramic particle aggregation to provide a composition having higher dispersibility. The average primary particle size of the ceramic particles usable as the (A) component is not particularly limited, and is preferably 2.0 $\mu$m or less, more preferably 1.5 $\mu$m or less, further preferably 1.0 $\mu$m or less, particularly preferably 0.5 $\mu$m or less. Such a range more suppresses ceramic particle precipitation to provide a composition having higher dispersibility. The average primary particle size of the ceramic particles can be calculated based on the average value of the specific surface area (SA) of the ceramic particles as calculated from the values obtained by continuous measurement three times by a BET method, using a value of the true density of the ceramic particles, under the assumption that the shape of the ceramic particles is a true sphere. The specific surface area of the ceramic particles can be measured with, for example, Flow Sorb II 2300 manufactured by Micromeritics Instrument Corporation. Thus, examples of the range of the average primary particle size of the ceramic particles usable as the (A) component

are 0.001 μm or more and 2.0 μm or less, 0.005 μm or more and 1.5 μm or less, 0.01 μm or more and 1.0 μm or less, and 0.01 μm or more and 0.5 μm or less, but are not limited thereto.

The average secondary particle size of the ceramic particles used as the (A) component is not particularly limited, and is preferably 0.01 μm or more, more preferably 0.03 μm or more, further preferably 0.05 μm or more, particularly preferably 0.1 μm or more. Such a range can more reduce the probability of generation of excess thickening of the composition to provide a composition more suitable for coating. The average secondary particle size of the ceramic particles usable as the (A) component is not particularly limited, and is preferably 3 μm or less, more preferably 2 μm or less, further preferably 1.5 μm or less, particularly preferably 1 μm or less. Such a range can more suppress ceramic particle precipitation to provide a composition having higher dispersibility. The value of the average secondary particle size of the ceramic particles can be measured with a scattering particle size distribution measurement apparatus LA-950 manufactured by Horiba Ltd. Thus, examples of the range of the average secondary particle size of the ceramic particles used as the (A) component are 0.01 μm or more and 3 μm or less, 0.03 μm or more and 2 μm or less, 0.05 μm or more and 1.5 μm or less, and 0.1 μm or more and 1 μm or less, but are not limited thereto.

The (A) component may be a commercially available product or a synthetic product. When the ceramic particles are covered particles, particles before covering, serving as a raw material of the covered particles, may also be a commercially available product or a synthetic product. A commercially available product of the particles before covering is not particularly limited, and examples thereof include product name: WA#30000 and product name: GC#40000 manufactured by Fujimi Incorporated.

The ceramic particles may be used singly or two or more of such ceramic particles may be used in combination as the (A) component.

The content of the (A) component in the ceramic particle-containing composition is not particularly limited, and is preferably 0.1% by mass or more, more preferably 1% by mass or more, further preferably 10% by mass or more based on the total mass of the solid content in the composition. Such a range can more decrease the amount of other component removed in, for example, drying/degreasing to thereby provide a composition more excellent in terms of production cost. The content of the (A) component in the composition is not particularly limited, and is preferably 90% by mass or less, more preferably 80% by mass or less, further preferably 75% by mass or less based on the total mass of the solid content in the composition. Such a range can more reduce the probability of generation of excess thickening of the composition to provide a composition more suitable for coating. Thus, examples of the range of the content of the (A) component in the ceramic particle-containing composition are 0.1% by mass or more and 90% by mass or less, 1% by mass or more and 80% by mass or less, and 10% by mass or more and 75% by mass or less based on the total mass of the solid content in the composition, but are not limited thereto. Herein, when the composition contains two or more of such (A) components, the content of the (A) component means the total amount of such (A) components.

The ceramic particle-containing composition may contain particles containing boron nitride (BN), or the composition may contain substantially no particle containing BN or may contain no particle containing BN at all. Herein, the "containing substantially no particle containing BN" means that the content of the particles containing BN in the ceramic particle-containing composition is less than 0.1% by mass based on the total mass of the composition. The ceramic particle-containing composition may contain particles containing silicon carbide (SiC), or the composition may contain substantially no particle containing SiC or may contain no particle containing SiC at all. Herein, the "containing substantially no particle containing SiC" means that the content of the particles containing SiC in the ceramic particle-containing composition is less than 0.1% by mass based on the total mass of the composition.

<(B) Component: binder>

A ceramic particle-containing composition according to one embodiment of the present disclosure contains a binder (binder resin) as a (B) component. The (B) component can enhance formability and handleability of the prepreg.

The (B) component is not particularly limited, and a known resin can be used. In particular, a hydroxyl group-containing resin (hereinafter, also referred to as (B1) component) is preferred in view of obtaining excellent dispersibility and high stability over time. Preferred examples of the (B1) component include polyvinyl alcohol (PVA); modified polyvinyl alcohol (modified PVA) such as polyvinyl butyral (PVB), polyvinyl propyral, polyvinyl acetal and polyvinyl formal, a hydroxyl group-containing glyoxal resin, a hydroxyl group-containing acrylic resin, a phenol resin, a hydroxyl group-containing polyvinylpyrrolidone (PVP), a hydroxyl group-containing polyester, a hydroxyl group-containing silicone, and a hydroxyl group-containing polycarboxylic acid, but are not limited thereto. In particular, polyvinyl alcohol and modified polyvinyl alcohol are more preferred, polyvinyl alcohol, polyvinyl butyral, and polyvinyl acetal are further preferred, and polyvinyl acetal is particularly preferred in view of ease of handling and ease of viscosity adjustment.

In one preferred embodiment of the present disclosure, the (B) component contains a (B1) component: hydroxyl group-containing resin. The content of the (B1) component is preferably 50% by mass or more, more preferably 90% by mass or more (upper limit 100% by mass) based on the total mass of the (B) component. The binder serving as the (B) component is further preferably the (B1) component.

In one further preferred embodiment of the present disclosure, the (B1) component: hydroxyl group-containing resin contains at least one resin (hereinafter, also referred to as (B2) component) selected from the group consisting of polyvinyl alcohol (PVA), polyvinyl butyral (PVB), polyvinyl propyral, polyvinyl acetal, polyvinyl formal, a hydroxyl group-containing glyoxal resin, a hydroxyl group-containing acrylic resin, a phenol resin, a hydroxyl group-containing polyvinylpyrrolidone (PVP), a hydroxyl group-containing polyester, a hydroxyl group-containing silicone, and a hydroxyl group-containing polycarboxylic acid. The content of the (B2) component is preferably 50% by mass or more, more preferably 90% by mass or more (upper limit 100% by mass) based on the total mass of the (B1) component. The (B1) component: hydroxyl group-containing resin in the (B) component is further preferably the (B2) component. The resin serving as the (B) component is particularly preferably the (B2) component.

The weight average molecular weight of the binder usable as the (B) component is not particularly limited, and is preferably 1,000 or more, more preferably 2,000 or more, further preferably 5,000 or more. Such a range can provide a composition capable of more enhancing formability of the prepreg. The weight average molecular weight of the binder usable as the (B) component is not particularly limited, and is preferably 500,000 or less, more preferably 100,000 or less, further preferably 50,000 or less. Such a range can more reduce the probability of generation of excess thickening of the composition to provide a composition more suitable for coating. Herein, the value of the weight average molecular weight of the binder can be measured by gel permeation chromatography (GPC), and specifically can be measured by a method described in Examples. Thus, examples of the range of the weight average molecular weight of the resin usable as the (B) component are 1,000 or more and 500,000 or less, 2,000 or more and 100,000 or less, and 5,000 or more and 50,000 or less, but are not limited thereto.

The (B) component used here may be a commercially available product or a synthetic product. Such a commercially available product is not particularly limited, and examples thereof include product name: S-LEC (registered trademark) KW-3 manufactured by Sekisui Chemical Co., Ltd.

The resins may be used singly or two or more of such resins may be used in combination as the (B) component.

The content of the (B) component in the ceramic particle-containing composition is not particularly limited, and is preferably 0.01% by mass or more, more preferably 0.1% by mass or more, further preferably 1% by mass or more based on the total mass of the composition. Such a range can provide a composition capable of more enhancing formability of the prepreg. The content of the (B) component in the ceramic particle-containing composition is not particularly limited, and is preferably 50% by mass or less, more preferably 30% by mass or less, further preferably 25% by mass or less based on the total mass of the composition. Such a range can more decrease the amount of other component removed in, for example, drying/degreasing to thereby provide a composition more excellent in terms of production cost. Thus, examples of the range of the content of the (B) component in the ceramic particle-containing composition are 0.01% by mass or more and 50% by mass or less, 0.1% by mass or more and 30% by mass or less, and 1% by mass or more and 25% by mass or less based on the total mass of the composition, but are not limited thereto. Herein, when the composition contains two or more of such (B) components, the content of the (B) component means the total amount of such (B) components.

The ratio between the contents of the (A) component and the (B) component is not particularly limited. The content of the (B) component is preferably 0.1 part by mass or more, more preferably 1 part by mass or more, further preferably 2.5 parts by mass or more, particularly preferably 5 parts by mass or more per 100 parts by mass of the (A) component. Such a range can provide a composition more excellent in formability of the prepreg. The content of the (B) component is preferably 1,000 parts by mass or less, more preferably 100 parts by mass or less, further preferably 50 parts by mass or less per 100 parts by mass of the (A) component. Such a range can more decrease the amount of a resin component removed in degreasing to thereby provide a composition more excellent in terms of production cost. Thus, examples of the content of the (B) component are 0.1 part by mass or more and 1,000 parts by mass or less, 1 part by mass or more and 100 parts by mass or less, 2.5 parts by mass or more and 50 parts by mass or less, and 5 parts by mass or more and 50 parts by mass or less per 100 parts by mass of the (A) component, but are not limited thereto.

<(C) Component: plasticizer>

A ceramic particle-containing composition according to one embodiment of the present disclosure preferably contains a plasticizer as a (C) component. The (C) component can enhance flexibility of the prepreg. Herein, the plasticizer means a compound which functions to enhance flexibility of the prepreg according to the present disclosure.

The (C) component is not particularly limited, and a known plasticizer can be used. Among such plasticizers, preferred examples include, but not limited to, water-soluble plasticizers such as ethylene glycol, diethylene glycol, triethylene glycol, polyethylene glycol, glycerin and triethanolamine, and plasticizers insoluble in water to be formed into an emulsion, for example, phthalate-based plasticizers such as dibutyl phthalate, in view of dispersibility in the composition. From the same viewpoint, the (C) component is more preferably a water-soluble plasticizer, further preferably a water-soluble plasticizer which is a multimer, still more preferably diethylene glycol, triethylene glycol, or polyethylene glycol, particularly preferably polyethylene glycol. Diethylene glycol, triethylene glycol, and polyethylene glycol are respective multimers of two, three, and four or more ethylene glycols.

In one preferred embodiment of the present disclosure, the (C) component contains at least one compound (hereinafter, also referred to as (C1) component) selected from the group consisting of ethylene glycol, diethylene glycol, triethylene glycol, polyethylene glycol, glycerin, triethanolamine, and dibutyl phthalate. The content of the (C1) component is preferably 50% by mass or more, more preferably 90% by mass or more (upper limit 100% by mass) based on the total mass of the (C) component. The plasticizer serving as the (C) component is further preferably the (C1) component.

In one still preferred embodiment of the present disclosure, the (C) component contains at least one compound selected from the group consisting of diethylene glycol, triethylene glycol, and polyethylene glycol. The content of at least one compound selected from the group consisting of diethylene glycol, triethylene glycol, and polyethylene glycol is preferably 50% by mass or more, more preferably 90% by mass or more (upper limit 100% by mass) based on the total mass of the (C) component. The plasticizer serving as the (C) component is further preferably at least one compound selected from the group consisting of diethylene glycol, triethylene glycol, and polyethylene glycol.

The molecular weight of the plasticizer usable as the (C) component is not particularly limited, and is preferably smaller than the molecular weight of the binder serving as the (B) component. The molecular weight of the plasticizer, as calculated in terms of the sum of atomic weights, is preferably less than 1,000. For example, when the hydroxyl value of the plasticizer can be measured by a neutralization titration method, the average molecular weight of the plasticizer, as calculated from the hydroxyl value measurement result by a neutralization titration method, is preferably less than 1,000. The average molecular weight of the plasticizer, as calculated from the hydroxyl value measurement result by a neutralization titration method, can be calculated according to JIS K 0070:1992. Such a range allows for a more enhancement in effect of the plasticizer.

In one preferred embodiment of the present disclosure, it is preferable that the binder serving as the (B) component is a resin having a weight average molecular weight of 1,000 or more and the plasticizer serving as the (C) component is a plasticizer having an average molecular weight of less than 1,000, as calculated from the hydroxyl value measurement result by a neutralization titration method.

The plasticizer usable as the (C) component may be a commercially available product or a synthetic product. Such a commercially available product is not particularly limited, and examples thereof include product name: polyethylene glycol 200 manufactured by FUJIFILM Wako Pure Chemical Corporation.

The plasticizers may be used singly or two or more of such plasticizers may be used in combination as the (C) component.

The content of the (C) component in the ceramic particle-containing composition is not particularly limited, and is preferably 0.01% by mass or more, more preferably 0.1% by mass or more, further preferably 1% by mass or more based on the total mass of the composition. Such a range can provide a composition capable of imparting excellent flexibility to the prepreg. The content of the (C) component in the ceramic particle-containing composition is not particularly limited, and is preferably 50% by mass or less, more preferably 25% by mass or less, further preferably 10% by mass or less based on the total mass of the composition. Such a range can more decrease the amount of a plasticizer component removed in degreasing to thereby provide a composition more excellent in production cost. Thus, examples of the content of the (C) component in the ceramic particle-containing composition are 0.01% by mass or more and 50% by mass or less, 0.1% by mass or more and 25% by mass or less, and 1% by mass or more and 10% by mass or less based on the total mass of the composition, but are not limited thereto. Herein, when the composition contains two or more of such (C) components, the content of the (C) component means the total amount of such (C) components.

The ratio between the contents of the (C) component and the (A) component is not particularly limited. The content of the (C) component is preferably 0.1 part by mass or more, more preferably 1 part by mass or more, further preferably 2.5 parts by mass or more per 100 parts by mass of the (A) component. Such a range can provide a composition capable of imparting excellent flexibility to the prepreg. The content of the (C) component is preferably 1,000 parts by mass or less, more preferably 100 parts by mass or less, further preferably 50 parts by mass or less per 100 parts by mass of the (A) component. Such a range can more decrease the amount of a plasticizer component removed in degreasing to thereby provide a composition more excellent in terms of production cost. Thus, examples of the content of the (C) component are 0.1 part by mass or more and 1,000 parts by mass or less, 1 part by mass or more and 100 parts by mass or less, and 2.5 parts by mass or more and 50 parts by mass or less per 100 parts by mass of the (A) component, but are not limited thereto.

The ratio between the contents of the (B) component and the (C) component is not particularly limited, and the content of the (B) component is preferably 50 parts by mass or more, more preferably 100 parts by mass or more, further preferably 150 parts by mass or more per 100 parts by mass of the (C) component. The content of the (B) component is preferably 600 parts by mass or less, more preferably 500 parts by mass or less, further preferably 400 parts by mass or less per 100 parts by mass of the (C) component. Such a range advantageously achieves adequately keeping a state of curing of a green sheet by the binder and impartation of flexibility to the green sheet by the plasticizer, and this not only prevents cracking or breaking in finishing, but also facilitates handling. Thus, examples of the content of the (B) component are 50 parts by mass or more and 600 parts by mass or less, 100 parts by mass or more and 500 parts by mass or less, and 150 parts by mass or more and 400 parts by mass or less per 100 parts by mass of the (C) component, but are not limited thereto.

<(D) Component: water>

A ceramic particle-containing composition according to one embodiment of the present disclosure preferably contains water as a (D) component. The (D) component is preferably water which contains as few impurities as possible, and is more preferably, for example, water in which the total content of transition metal ions is 100 ppb or less. Here, the purity of the water usable as the (D) component can be increased by, for example, an operation such as removal of impurity ions with an ion exchange resin, removal of foreign substances with a filter, or distillation. Specifically, the (D) component used here is preferably, for example, deionized water (ion exchange water), pure water, ultrapure water, or distilled water.

<(E) Component: acid>

A ceramic particle-containing composition according to one embodiment of the present disclosure may further contain an acid as an (E) component. The (E) component is used as a pH adjusting agent, and can more reduce the pH of the composition.

The (E) component is not particularly limited, and a known acid can be used. The (E) component may be any of an organic acid and an inorganic acid. The acid is preferably an acid which is not a multimer. The acid which is not a multimer is preferably a compound having a sum of atomic weights of less than 1,000.

The organic acid is not particularly limited, and examples thereof include carboxylic acids such as formic acid, acetic acid, propionic acid, butyric acid, valeric acid, 2-methylbutyric acid, n-hexanoic acid, 3,3-dimethylbutyric acid, 2-ethylbutyric acid, 4-methylpentanoic acid, n-heptanoic acid, 2-methylhexanoic acid, n-octanoic acid, 2-ethylhexanoic acid, benzoic acid, glycolic acid, salicylic acid, glycerin acid, oxalic acid, malonic acid, succinic acid, glutaric acid, adipic acid, pimelic acid, maleic acid, phthalic acid, malic acid, tartaric acid, citric acid, lactic acid, diglycolic acid, 2-furancarboxylic acid, 2,5-furandicarboxylic acid, 3-furancarboxylic acid, 2-tetrahydrofurancarboxylic acid, methoxyacetic acid, methoxyphenylacetic acid and phenoxyacetic acid; and sulfur-containing organic acids such as methanesulfonic acid, ethanesulfonic acid and isethionic acid. The inorganic acid is not particularly limited, and examples thereof include carbonic acid, hydrochloric acid, nitric acid, phosphoric acid, hypophosphorous acid, phosphorus acid, phosphonic acid, sulfuric acid, boric acid, hydrofluoric acid, orthophosphoric acid, pyrophosphoric acid, polyphosphoric acid, metaphosphoric acid, and hexametaphosphoric acid. Among them, the inorganic acid is preferred, nitric acid, sulfuric acid, or hydrochloric acid is more preferred, nitric acid or hydrochloric acid is further preferred, and hydrochloric acid is particularly preferred.

In one preferred embodiment of the present disclosure, the acid usable as the (E) component contains an inorganic acid. The content of the inorganic acid is preferably 50% by mass or more, more preferably 90% by mass or more (upper limit 100% by mass) based on the total mass of the (E) component. The acid serving as the (E) component is further preferably the inorganic acid.

In one further preferred embodiment of the present disclosure, the (E) component contains at least one acid (hereinafter, also referred to as (E1) component) selected from the group consisting of carbonic acid, hydrochloric acid, nitric acid, phosphoric acid, hypophosphorous acid, phosphorus acid, phosphonic acid, sulfuric acid, boric acid, hydrofluoric acid, orthophosphoric acid, pyrophosphoric acid, polyphosphoric acid, metaphosphoric acid, and hexametaphosphoric acid. The content of the (E1) component is preferably 50% by mass or more, more preferably 90% by mass or more (upper limit 100% by mass) based on the total mass of the (E) component. The acid serving as the (E) component is further preferably the (E1) component.

The (E) component used here may be a commercially available product or a synthetic product. The acids may be used singly or two or more of such acids may be used in combination as the (E) component.

The content of the (E) component in the ceramic particle-containing composition is not particularly limited, and is preferably an amount such that the pH at 25°C of the composition is in a preferred range described below.

<(F) Component: thickener>

The ceramic particle-containing composition according to the present disclosure may further contain a thickener as an (F) component. The viscosity of the ceramic particle-containing composition can be adjusted with the (F) component. Herein, the thickener means a compound which functions to increase the viscosity of the ceramic particle-containing composition.

The thickener is preferably a compound capable of allowing the viscosity at 25°C to be 1 Pa·s or more in a thickening effect test. The thickener is more preferably a compound capable of allowing the viscosity at 25°C to be 5 Pa·s or more in a thickening effect test, further preferably a compound capable of allowing the viscosity at 25°C to be 10 Pa·s or more in the test. The (F) component preferably contains a compound listed above. Herein, each of the compound serving as the (B) component and the compound serving as the (C) component is preferably a compound achieving a viscosity at 25°C of less than 1 Pa·s in a thickening effect test. It is noted that each of the compound serving as the (B) component and the compound serving as the (C) component is not limited to such a compound.

The thickening effect test is performed in the following manner. First, an aqueous dispersion of alumina particles (product name: WA#30000, manufactured by Fujimi Incorporated, average secondary particle size 0.3 $\mu$m) having a concentration of alumina particles of 25% by mass (a dispersion consisting of alumina particles and water) is prepared, and 100 g of the aqueous dispersion having a concentration of alumina particles of 25% by mass is added to 5 g of an aqueous hydrochloric acid solution having a concentration of 2.5% by mass under stirring. Next, a test compound in an amount of 4 parts by mass or less per 100 parts by mass of the alumina particles is added to the resulting aqueous dispersion (the aqueous dispersion containing the alumina particles and hydrochloric acid). The viscosity at 25°C of the aqueous dispersion of alumina particles after addition of the test compound is then measured. In the thickening effect test, determination is made on the basis of the maximum value of the viscosity at 25°C when the test compound in an amount in a range of 4 parts by mass or less per 100 parts by mass of the alumina particles is added. Herein, the viscosity of the aqueous dispersion of alumina particles can be measured by the same method as for the viscosity at 25°C of the ceramic particle-containing composition.

The (F) component is not particularly limited, and a known thickener can be used. The thickener usable as the (F) component may be an ionic thickener or a nonionic thickener. The ionic thickener may be an anionic thickener or a cationic thickener. The thickener is preferably an ionic thickener, more preferably a cationic thickener, further preferably a cationic thickener containing a polymer having a (meth)acryloyl group, still further preferably a W/O emulsion containing a poly(meth)acrylate-based cationic polymer (for example, a cationic polymer containing a (meth)acrylate structural unit), particularly preferably a W/O emulsion containing a polymethacrylate-based cationic polymer (for example, a cationic polymer containing a methacrylate structural unit). The (F) component preferably contains any of the above-listed thickeners. Herein, the (meth)acryloyl group means a collective term of an acryloyl group and a methacryloyl group. The (meth)acrylate means a collective term of acrylate and methacrylate.

The (F) component used here may be a commercially available product or a synthetic product. Such a commercially available product is not particularly limited, and examples thereof include Senka Actgel AP200, Senka Actgel NS100, Senka Actgel CM100, and Senka Actgel CD100 manufactured by Senka Corporation.

The thickener may be used singly or two or more of such thickeners may be used in combination as the (F) component.

When the (F) component is used, the content of the (F) component in the ceramic particle-containing composition is not particularly limited, and is preferably an amount such that the viscosity at 25°C of the ceramic particle-containing composition is in a preferred range described below.

<(G) Component: other components than (A) to (F) components described above>

A ceramic particle-containing composition according to one embodiment of the present disclosure may further contain, as a (G) component, other components than the (A) to (F) components as long as the effects of the present disclosure are not impaired. The (G) component is not particularly limited, and examples thereof include a base (basic compound, alkali), a salt, a chelating agent, a defoamer, and an organic solvent.

The content of the (G) component is not particularly limited as long as the effects of the present disclosure are obtained, and the content is preferably less than 10% by mass, more preferably less than 5% by mass, further preferably less than 3% by mass based on the total mass of the ceramic particle-containing composition.

<Total solid concentration in composition>

The total solid concentration in a ceramic particle-containing composition according to one embodiment of the present disclosure is not particularly limited, and is preferably 20% by mass or more, more preferably 25% by mass or more, further preferably 30% by mass or more. The total solid concentration in the ceramic particle-containing composition is not particularly limited, and is preferably 60% by mass or less, more preferably 50% by mass or less, further preferably 45% by mass or less. Such a range advantageously achieves an adequate viscosity for coating and can provide a high-quality green sheet not having any breaking and air bubbles. Thus, examples of the total solid concentration in the ceramic particle-containing composition are 20% by mass or more and 60% by mass or less, 25% by mass or more and 50% by mass or less, and 30% by mass or more and 45% by mass or less, but are not limited thereto.

<pH>

The pH at 25°C of a ceramic particle-containing composition according to one embodiment of the present disclosure is preferably 3.0 or more. The pH at 25°C of the ceramic particle-containing composition is more preferably more than 3.0, further preferably 3.1 or more. Such a range can more suppress occurrence of bleed-out of some components during formation of a ceramic sintered body. The pH at 25°C of the ceramic particle-containing composition is preferably 12.0 or less, more preferably 9.0 or less, further preferably 7.0 or less, particularly preferably 5.5 or less. Such a range can more suppress thickening by dehydration-condensation of the resin used as the binder to more reduce the probability of generation of excess thickening of the composition, and therefore a composition more suitable for coating can be provided.

The pH at 25°C of the ceramic particle-containing composition can be measured with a pH meter, and specifically can be measured by a method described in Examples. Thus, examples of the pH at 25°C of the ceramic particle-containing composition are 3.0 or more and 12.0 or less, 3.0 or more and 9.0 or less, more than 3.0 and 7.0 or less, and 3.1 or more and 5.5 or less, but are not limited thereto.

<Viscosity>

The viscosity at 25°C of the ceramic particle-containing composition is not particularly limited, and is preferably 0.01 Pa·s or more, more preferably 0.03 Pa·s or more, further preferably 0.05 Pa·s or more. The viscosity at 25°C of the ceramic particle-containing composition is not particularly limited, and is preferably 5 Pa·s or less, more preferably 3 Pa·s or less, further preferably 2 Pa·s or less. When the viscosity is in such a range, a prepreg which is excellent in dispersibility of unidirectional ceramic fibers having a coefficient of variation of 2.0 or less can be obtained. The ceramic particle-containing composition is also enhanced in coatability and ceramic fibers are more easily impregnated with the composition. The viscosity at 25°C of the ceramic particle-containing composition can be measured with a B-type viscometer, and specifically can be measured by a method described in Examples. Thus, examples of the range of the viscosity at 25°C of the ceramic particle-containing composition are 0.01 Pa·s or more and 5 Pa·s or less, 0.03 Pa·s or more and 3 Pa·s or less, and 0.05 Pa·s or more and 2 Pa·s or less, but are not limited thereto. The viscosity can be controlled by, for example, the type and the content of each component in the ceramic particle-containing composition, and the total solid concentration in the composition.

<Method for producing composition>

The method for producing the ceramic particle-containing composition is not particularly limited, and includes, for example, mixing the (A) component: ceramic particles, the (B) component: binder, the (C) component: plasticizer, and the (D) component: water. The method for producing the ceramic particle-containing composition may include, if necessary, further mixing other components (for example, the above (E) component, (F) component, and (G) component).

The (A) component is preferably added in the form of a dispersion containing the (A) component and the (D) component. The (B) component is preferably added in the form of a dispersion containing the (B) component and the (D) component. Accordingly, the method for producing the composition preferably includes mixing a dispersion containing the (A) component and the (D) component, a dispersion containing the (B) component and the (D) component, and at least one selected from the group consisting of the (C) component, a solution containing the (C) component, and a dispersion containing the (C) component.

[Method for producing prepreg]

A method for producing a unidirectional ceramic fiber prepreg according to one embodiment of the present disclosure is not particularly limited, and is preferably a production method including the steps of (1) providing plural ceramic fibers unidirectionally oriented and a ceramic particle-containing composition, (2) coating a support with the ceramic particle-containing composition to obtain a coating film, (3) immersing the plural ceramic fibers unidirectionally oriented, in the coating film, to obtain an impregnated product with the ceramic particle-containing composition, and (4) drying the impregnated product with the ceramic particle-containing composition and then peeling the support to obtain a unidirectional ceramic fiber prepreg. Hereinafter, each step is described.

<(1) Step of providing plural ceramic fibers unidirectionally oriented and ceramic particle-containing composition>

In the present step, unidirectional ceramic fibers are provided. The method therefor is not particularly limited, and is preferably a method including opening a ceramic fiber bundle. The opening is an operation of dividing a converged ceramic fiber bundle, which is expected to have the effect of further enhancing the penetration of the ceramic particle-containing composition.

When the ceramic fiber bundle is opened, an opening apparatus is preferably used. The opening method is not particularly limited, and, for example, a known method. Examples of the known method include a method including alternately passing the ceramic fiber bundle through a concave-convex roll, a method involving use of a drum-shaped roll, a method including applying tension fluctuation to axial vibration, a method including varying the tension of the fiber bundle with plural friction bodies vertically reciprocated, a method including blowing air to the fiber bundle, a method including subjecting the fiber bundle to air suction, a method involving use of a fiber-opening element by spring, or a method involving use of an expander roll, and these can be used singly or in appropriate combinations thereof.

In the present step, a ceramic particle-containing composition is provided. The method for providing the ceramic particle-containing composition is as described above, and the description thereof is here omitted.

<(2) Step of coating support with ceramic particle-containing composition to obtain coating film>

In the present step, a support is coated with the ceramic particle-containing composition prepared in step (1) described above, to obtain a coating film.

The support used here is suitably a film including a resin material. Examples of the resin material include a polyester resin such as polyethylene terephthalate (PET) and polyethylene naphthalate (PEN), a polycarbonate (PC) resin, an acrylic resin such as polymethyl methacrylate (PMMA), a cyclic olefin polymer (COP), a triacetylcellulose (TAC) resin, a polyethersulfone (PES) resin, a polyetherketone (PEK) resin, and a polyimide (PI) resin. Among them, polyethylene terephthalate (PET) is preferred. The film formed of a resin material may be subjected to surface treatment such as corona treatment, atmospheric-pressure plasma treatment, vacuum plasma treatment, or primer coating treatment.

The method applied here for coating with the ceramic particle-containing composition can be, for example, a known method such as a bar coater method, an applicator method, a curtain flow coater method, a roll coater method, a spray method, a gravure coater method, a comma coater method, a reverse roll coater method, a lip coater method, a die coater method, a slot die coater method, an air knife coater method, or a dip coater method. Among them, an applicator method is preferred.

The thickness of the coating film is preferably 10 $\mu$m or more and 2000 $\mu$m or less, more preferably 50 $\mu$m or more and 1800 $\mu$m or less, further preferably 100 $\mu$m or more and 1500 $\mu$m or less. The thickness of the coating film can be adjusted to control the fiber content (Vf) of the unidirectional ceramic fibers in the prepreg to a desired value.

After the coating film is formed, the coating film may be dried, if necessary, but preferably the unidirectional ceramic fibers are immersed therein without drying.

<(3) Step of immersing plural ceramic fibers unidirectionally oriented, in coating film, to obtain impregnated product with ceramic particle-containing composition>

In the present step, the unidirectional ceramic fibers are immersed in the coating film obtained in step (2) described above, to obtain an impregnated product with the ceramic particle-containing composition.

When the unidirectional ceramic fibers are immersed, the unidirectional ceramic fibers may or may not be secured with a resin or metal frame.

The temperature (immersion temperature) of the coating film during immersion is not particularly limited, and is usually in a range of 10°C or more and 40°C or less. The immersion time is also not particularly limited, and is usually 0.5 minutes or more and 10 minutes or less. After immersion, an impregnated product with the ceramic particle-containing composition is obtained in which the unidirectional ceramic fibers are impregnated with the ceramic particle-containing composition and the support is still attached.

<(4) Step of drying impregnated product with ceramic particle-containing composition to obtain prepreg>

In the present step, the impregnated product with the ceramic particle-containing composition, which is obtained in step (3) described above, is dried and thereafter the support is peeled to obtain a unidirectional ceramic fiber prepreg.

The drying method is not particularly limited, and examples thereof include drying by heating and hot air drying. In the case of drying by heating, the drying temperature is preferably in a range of 70°C or more and 140°C or less and the drying time is preferably in a range of 10 minutes or more and 60 minutes or less.

After drying, the support can be peeled to obtain a unidirectional ceramic fiber prepreg. The thickness of the resulting unidirectional ceramic fiber prepreg is not particularly limited, and is preferably 10 $\mu$m or more and 500 $\mu$m or less, more preferably 20 $\mu$m or more and 300 $\mu$m or less, further preferably 50 $\mu$m or more and 200 $\mu$m or less. The width and the length of the unidirectional ceramic fiber prepreg can be appropriately set depending on the intended use.

A production method including a sintering step of sintering the unidirectional ceramic fiber prepreg thus obtained can be performed to obtain a ceramic matrix composite material (CMC) composed of a ceramic fiber serving as a reinforcing material and a matrix also constituted by a ceramic material. Such a ceramic matrix composite material is considered to have excellent mechanical properties or the like.

Embodiments of the present disclosure have described in detail, but these are explanatory and illustrative and are not limiting. It is clear that the scope of the present disclosure is to be interpreted by the accompanying claims.

The present disclosure includes the following aspects and modes:

1. A method for producing a unidirectional ceramic fiber prepreg, the method including a step of providing plural ceramic fibers unidirectionally oriented and a ceramic particle-containing composition, a step of coating a support with the ceramic particle-containing composition to obtain a coating film, a step of immersing the plural ceramic fibers unidirectionally oriented, in the coating film, to obtain an impregnated product with the ceramic particle-containing composition, and a step of drying the impregnated product with the ceramic particle-containing composition and then peeling the support to obtain a unidirectional ceramic fiber prepreg:

2. The method for producing a unidirectional ceramic fiber prepreg according to the above 1., wherein a viscosity at 25°C of the ceramic particle-containing composition is 0.01 Pa·s or more and 5 Pa·s or less:

3. The method for producing a unidirectional ceramic fiber prepreg according to the above 1. or 2., wherein a thickness of the coating film is 10 $\mu$m or more and 2000 $\mu$m or less:

4. A unidirectional ceramic fiber prepreg including plural ceramic fibers unidirectionally oriented and a ceramic particle-containing composition with which the plural ceramic fibers are impregnated, wherein in a cut surface along a thickness direction of the unidirectional ceramic fiber prepreg, a coefficient of variation in the number of the ceramic fibers per unit zone is 2.0 or less:

5. The unidirectional ceramic fiber prepreg according to the above 4., wherein the coefficient of variation is 1.7 or less:

6. The unidirectional ceramic fiber prepreg according to the above 4. or 5., wherein the ceramic fibers are silicon carbide fibers, alumina fibers, mullite fibers, or carbon fibers:

7. The unidirectional ceramic fiber prepreg according to any of the above 4. to 6., wherein the ceramic particles contained in the ceramic particle-containing composition is at least one selected from the group consisting of alumina particles, silicon carbide particles, and silicon carbide particles covered with a covering layer containing aluminum hydroxide:

8. The unidirectional ceramic fiber prepreg according to any of the above 4. to 7., wherein a fiber content of the ceramic fibers in the unidirectional ceramic fiber prepreg is 20% by volume or more and 85% by volume or less.

**Examples**

The technique of the present disclosure will be described in further detail by way of the following Examples and Comparative Examples. It is noted that the technical scope of the present disclosure is not limited to only the following Examples. Herein, unless particularly noted, "%" and "part(s)" respectively mean "% by mass" and "part(s) by mass". In the following Examples, operations were performed under conditions of room temperature (25°C)/relative humidity 40% RH or more and 50% RH or less, unless particularly noted.
Physical properties were measured by the following methods.

(Average secondary particle size of ceramic particles)

A value measured as a volume average particle size by a dynamic light scattering method with a particle size distribution measurement apparatus (UPA-UT151, manufactured by Nikkiso Co., Ltd.) was adopted as the average secondary particle size of the ceramic particles.

(Measurement of pH)

The pH of the ceramic particle-containing composition was measured at 25°C with a pH meter (Model Number: F-71) manufactured by Horiba Ltd.

(Measurement of viscosity)

The viscosity of the ceramic particle-containing composition was measured at 25°C with a B-type viscometer (model number: TVB-10, rotor No. 27, rotation speed of rotor: 60 rpm) manufactured by TOKISANGYO.

(Measurement of weight average molecular weight of binder)

The weight average molecular weight (Mw) of the binder contained in the ceramic particle-containing composition was measured as a value in terms of polyethylene oxide by gel permeation chromatography (GPC) under the following measurement conditions:

<<GPC measurement conditions>>

Sample concentration: 0.1% by mass

Column: "TSKgel (registered trademark) GMPWXL" manufactured by Tosoh Corporation

Detector: differential refractometer

Eluent: aqueous 100 mM sodium nitrate solution

Flow rate: 1 mL/min

Measurement temperature :40°C

Amount of injection of sample: 200 $\mu$L

Measurement apparatus: "HLC-8320GPC" manufactured by Tosoh Corporation.

(Measurement of molecular weight of plasticizer)

The average molecular weight of the plasticizer was calculated from the hydroxyl value measurement result according to a neutralization titration method, according to JIS K 0070:1992. More specifically, calculation was performed by the following procedure:

(1) Operation: the hydroxyl value of 0.6 g of the plasticizer was determined by "Test methods for acid value, saponification value, ester value, iodine value, hydroxyl value and unsaponifiable matter of chemical products, 7.1 neutralization titration method" of JIS K 0070:1992;

(2) Calculation: the average molecular weight was calculated by the following expression:

$$A = (56106/B) \times 2$$

A: average molecular weight

B: hydroxyl value (unit: mgKOH/g) determined in (1) described above

56106: coefficient based on molecular weight of potassium hydroxide.

[Production of prepreg]

<Providing carbon fibers unidirectionally oriented>

A carbon fiber bundle was opened with an opening apparatus to provide plural carbon fibers unidirectionally oriented.

<Silicon carbide (SiC) particles covered with aluminum hydroxide>

A 20% by mass aqueous dispersion liquid of silicon carbide (SiC) particles (GC#40000, average secondary particle size 0.36 $\mu$m, manufactured by Fujimi Incorporated, powder) was prepared, and a 1M NaOH aqueous solution was added thereto so that the pH was 10.0. Next, a 30% by mass aqueous dispersion liquid of sodium aluminate was prepared, and the aqueous dispersion liquid of sodium aluminate in an amount such that the sodium aluminate was 50 parts by mass per 100 parts by mass of the silicon carbide particles and 9.9% by mass nitric acid were added over 45 minutes under stirring so that the pH was kept at 9.0 to 11.0. Thereafter, stirring was performed for additional 45 minutes. Then 9.9% by mass nitric acid was added so that the pH of the dispersion liquid was 10.5, and thus an aqueous dispersion liquid containing silicon carbide (SiC) particles covered with aluminum hydroxide was prepared. Thereafter, 9.9% by mass nitric acid was added so that the pH was 3.0, and the resultant was concentrated by suction filtration to obtain an aqueous dispersion in which the concentration of the SiC particles covered with aluminum hydroxide was 40% by mass.

<Compositional ratio and structural analysis of particles in aqueous dispersion>

It was confirmed by the following analysis that the particles in the dispersion obtained above was the SiC particles covered with aluminum hydroxide.

About 2 mL of the aqueous dispersion obtained above was taken, and dropped on a filter (Nuclepore 5 $\mu$m) (manufactured by Whatman Plc). Subsequently, suction filtration was performed, and thereafter a powder was washed on the filter with 10 mL of pure water, and dried the particles. The particles after drying were then taken on a Si wafer, and subjected to SEM (Scanning Electron Microscope)-EDX (Energy Dispersive X-ray Spectroscopy) observation with a scanning electron microscope SU-8000 manufactured by Hitachi High-Technologies Corporation.

The particles after drying were taken on a carbon tape, and subjected to EELS (Electron Energy Loss Spectroscopy) analysis with TITAN 80-300 manufactured by FEI Company.

In SEM-EDX observation of the particles, C, Al, and O were selected as elements to be observed. It was confirmed that a position at which an EDX spectrum of Al was observed and EDX spectra of C, Al and O were observed clearly corresponded to a position at which the particle was observed in an image observed with SEM. Thus it was determined that the SiC particle was covered with a component containing Al and O.

It was also confirmed in EELS analysis of the particles that the EELS spectrum observed had a spectral shape specific to an EELS standard spectrum of aluminum hydroxide ($Al(OH)_3$) (a shape different from a spectrum of Al or other compound containing Al and O), and therefore it was determined that the component containing Al and O contained $Al(OH)_3$.

<Preparation of ceramic particle-containing composition>

The silicon carbide particles covered with aluminum hydroxide obtained above, an aqueous dispersion liquid of 20% by mass of polyvinyl acetal (water-soluble polymer, product name: S-LEC (registered trademark) KW-3, manufactured by Sekisui Chemical Co., Ltd., degree of polymerization: about 600, weight average molecular weight: 1,000 or more) as a binder resin, polyethylene glycol (PEG 200, number average molecular weight: 200, weight average molecular weight: less than 1000, manufactured by FUJIFILM Wako Pure Chemical Corporation) as a plasticizer, and Olfine (registered trademark) E1004 (manufactured by Nisshin Chemical Co., Ltd.) as a defoamer were added into a container at a quantitative ratio so that the solid content shown in Table 1 below was achieved. Thereafter, these were stirred with a rotating and revolving mixer (Awatori Rentaro, ARE-310, manufactured by Thinky Corporation) under revolution at 1400 rpm for 2 minutes, to obtain a ceramic particle-containing composition having a total solid concentration of 35.5% by mass.

The ceramic particle-containing composition obtained had a pH of 3.86 and a viscosity at 25°C of 85 mPa·s.

[Table 1]

Table 1

|  | Solid content |
| --- | --- |
| SiC particles | 67.5 % by mass |
| KW-3 | 20.0 % by mass |
| PEG200 | 10.0% by mass |
| E1004 | 2.5% by mass |

(Example)

A polyethylene terephthalate (PET) film (Lumirror (registered trademark) S10, thickness 100 $\mu$m, manufactured by Toray Industries, Inc.) was provided as a support. This PET film was mounted on a coating machine (IMC-7373 manufactured by Imoto Machinery Co., Ltd.), and the PET film was coated with the ceramic particle-containing composition obtained above, by use of an applicator, to obtain a coating film having a thickness of 450 $\mu$m.

The plural carbon fibers unidirectionally oriented, prepared as above, were immersed in the coating film obtained, under conditions of an immersion temperature of 25°C and an immersion time of 1 minute, to obtain an impregnated product with the ceramic particle-containing composition.

The impregnated product with the ceramic particle-containing composition obtained was placed in a light spec constant temperature/constant humidity device (model number: LU-114, manufactured by ESPEC Corp.) set at 90°C, and dried for 20 minutes. After completion of drying, the PET film as a support was peeled to obtain a unidirectional ceramic fiber prepreg having a thickness of 137 $\mu$m. The fiber content (Vf) of the carbon fibers in the unidirectional ceramic fiber prepreg obtained was 45.8% by volume.

[Calculation of coefficient of variation]

The unidirectional ceramic fiber prepreg obtained above was cut in the thickness direction with a vertical slicer (model number: HS-1-S, manufactured by JASCO Engineering Co., Ltd.), and thus cut out to a size of about 10 mm × about 10 mm. The cut surface of the prepreg cut out was photographed with a low-vacuum scanning electron microscope (model number: JSM-IT100, manufactured by JEOL Ltd., magnification 500x). The region photographed has a size of 192 $\mu$m in length × 256 $\mu$m in width.

The photograph taken was captured in Jw-cad being software, and the length was divided into quarters along with the entire thickness and a width of 256 $\mu$m was laterally divided into quarters in the region photographed. Thus, zones at 16 locations in total were obtained, and the number of carbon fibers per zone was measured for each of the zones obtained. The standard deviation and the average value of the numbers of carbon fibers at such 16 locations were calculated. The resulting value of the standard deviation was divided by the average value, and thus the coefficient of variation of unidirectional ceramic fibers was determined to be 1.247.

Herein, Fig. 1 illustrates a SEM photograph of a cut surface along the thickness direction of the unidirectional ceramic fiber prepreg obtained in the present Example. As clear from Fig. 1, it was found that the prepreg obtained in the present Example was favorable in dispersibility of unidirectional carbon fibers. Accordingly, it was supposed that a ceramic matrix composite material produced with the prepreg obtained in the present Example could have excellent mechanical properties and the like.

(Comparative Example)

A ceramic particle-containing composition was prepared by the same method as in Example described above, and an immersion bath of the ceramic particle-containing composition obtained was prepared. The plural carbon fibers unidirectionally oriented, as prepared by the same method as described above, were immersed at a temperature of 25°C for 2 minutes in the immersion bath prepared. It was found that the carbon fibers taken out after immersion were bundled and/or had a gap formed, and were very low in dispersibility and therefore not usable in a prepreg.

The present application claims priority to Japanese Patent Application No. 2023-169589 filed on September 29, 2023, and the disclosure thereof is herein incorporated by reference in its entity.

**Claims**

1. A method for producing a unidirectional ceramic fiber prepreg, the method comprising

   a step of providing plural ceramic fibers unidirectionally oriented and a ceramic particle-containing composition,
   a step of coating a support with the ceramic particle-containing composition to obtain a coating film,
   a step of immersing the plural ceramic fibers unidirectionally oriented, in the coating film, to obtain an impregnated product with the ceramic particle-containing composition, and
a step of drying the impregnated product with the ceramic particle-containing composition and then peeling the support to obtain a unidirectional ceramic fiber prepreg.

2. The method for producing a unidirectional ceramic fiber prepreg according to claim 1, wherein a viscosity at 25°C of the ceramic particle-containing composition is 0.01 Pa·s or more and 5 Pa·s or less.

3. The method for producing a unidirectional ceramic fiber prepreg according to claim 1 or 2, wherein a thickness of the coating film is 10 $\mu$m or more and 2000 $\mu$m or less.

4. A unidirectional ceramic fiber prepreg comprising

plural ceramic fibers unidirectionally oriented, and
a ceramic particle-containing composition with which the plural ceramic fibers are impregnated, wherein
in a cut surface along a thickness direction of the unidirectional ceramic fiber prepreg, a coefficient of variation in the number of the ceramic fibers per unit zone is 2.0 or less.

5. The unidirectional ceramic fiber prepreg according to claim 4, wherein the coefficient of variation is 1.7 or less.

6. The unidirectional ceramic fiber prepreg according to claim 4 or 5, wherein the ceramic fibers are silicon carbide fibers, alumina fibers, mullite fibers, or carbon fibers.

7. The unidirectional ceramic fiber prepreg according to claim 4 or 5, wherein the ceramic particles contained in the ceramic particle-containing composition is at least one selected from the group consisting of alumina particles, silicon carbide particles, and silicon carbide particles covered with a covering layer containing aluminum hydroxide.

8. The unidirectional ceramic fiber prepreg according to claim 4 or 5, wherein a fiber content of the ceramic fibers in the unidirectional ceramic fiber prepreg is 20% by volume or more and 85% by volume or less.

FIG. 1

## INTERNATIONAL SEARCH REPORT

| International application No. |
| --- |
| **PCT/JP2024/028412** |

| A. | CLASSIFICATION OF SUBJECT MATTER |
| --- | --- |

*C04B 35/80*(2006.01)i; *B28B 1/52*(2006.01)i; *B29B 11/16*(2006.01)i; *B29C 70/20*(2006.01)i; *C08J 5/04*(2006.01)i; *D06M 11/45*(2006.01)i; *D06M 11/74*(2006.01)i
FI: C04B35/80; B28B1/52; B29B11/16; B29C70/20; C08J5/04; D06M11/45; D06M11/74

According to International Patent Classification (IPC) or to both national classification and IPC

| B. | FIELDS SEARCHED |
| --- | --- |

Minimum documentation searched (classification system followed by classification symbols)

C04B35/80; B28B1/52; B29B11/16; B29B15/08-15/14; B29C70/00-70/88; C08J5/04-5/10; C08J5/24; D06M11/45; D06M11/74

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 07-196374 A (TONEN CORP.) 01 August 1995 (1995-08-01) claims, paragraphs [0036]-[0053] | 1-3 |
| Y | | 4-8 |
| Y | WO 2017/110912 A1 (MITSUBISHI RAYON CO., LTD.) 29 June 2017 (2017-06-29) paragraphs [0029], [0030] | 4-8 |
| Y | WO 2019/065956 A1 (FUJIMI INC.) 04 April 2019 (2019-04-04) claims | 7 |
| A | JP 2009-074075 A (TORAY INDUSTRIES, INC.) 09 April 2009 (2009-04-09) entire text | 1-8 |
| A | JP 2012-153840 A (FUKUI PREFECTURE) 16 August 2012 (2012-08-16) entire text | 1-8 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 September 2024** | **24 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 786 442 A1**

## INTERNATIONAL SEARCH REPORT

<table>
<tr><td colspan="2">International application No.</td></tr>
<tr><td colspan="2">**PCT/JP2024/028412**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| A | JP 05-156046 A (SUMITOMO CHEMICAL CO., LTD.) 22 June 1993 (1993-06-22) <br> entire text | 1-8 |
| A | JP 58-051120 A (TOHO BESLON CO.) 25 March 1983 (1983-03-25) <br> entire text | 1-8 |
| A | JP 2012-530838 A (HEXCEL COMPOSITES LTD.) 06 December 2012 (2012-12-06) <br> entire text | 1-8 |
| A | JP 63-170427 A (TORAY INDUSTRIES, INC.) 14 July 1988 (1988-07-14) <br> entire text | 1-8 |
| A | WO 2020/066152 A1 (FUJIMI INC.) 02 April 2020 (2020-04-02) <br> entire text | 1-8 |

Form PCT/ISA/210 (second sheet) (July 2022)

**INTERNATIONAL SEARCH REPORT**
**Information on patent family members**

International application No.

**PCT/JP2024/028412**

| Patent document cited in search report | | | Publication date (day/month/year) | Patent family member(s) | | | Publication date (day/month/year) |
|---|---|---|---|---|---|---|---|
| JP | 07-196374 | A | 01 August 1995 | (Family: none) | | | |
| WO | 2017/110912 | A1 | 29 June 2017 | US paragraphs [0070]-[0074] EP KR CN | 2018/0257265 3395551 10-2018-0083372 108472880 | A1 A1 A A | |
| WO | 2019/065956 | A1 | 04 April 2019 | US claims EP CN | 2020/0216677 3543210 111132931 | A1 A1 A | |
| JP | 2009-074075 | A | 09 April 2009 | (Family: none) | | | |
| JP | 2012-153840 | A | 16 August 2012 | (Family: none) | | | |
| JP | 05-156046 | A | 22 June 1993 | (Family: none) | | | |
| JP | 58-051120 | A | 25 March 1983 | (Family: none) | | | |
| JP | 2012-530838 | A | 06 December 2012 | US entire text WO EP CN KR | 2012/0100335 2010/150021 2445713 102802943 10-2013-0045227 | A1 A1 A1 A A | |
| JP | 63-170427 | A | 14 July 1988 | US entire text EP | 5028478 274899 | A A2 | |
| WO | 2020/066152 | A1 | 02 April 2020 | US entire text EP CN | 2021/0380813 3858802 112739664 | A1 A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6978896 B
- WO 2012077787 A
- WO 2019065956 A
- JP 2023169589 A